# EUROPEAN PATENT SPECIFICATION

(11) **EP 3 231 643 B1**
(45) Date of publication and mention of the grant of the patent: **16.09.2020**
(21) Application number: 15867108.1
(22) Date of filing: 27.11.2015
(51) Int. Cl.: F16C 17/10, F16C 33/20, F16F 9/05, B60G 11/28, F16F 9/54, F16F 9/43, B60G 11/27

(54) **VEHICLE THRUST BEARING**
FAHRZEUGAXIALLAGER
PAILER DE BUTÉE DE VÉHICULE

(30) Priority: 12.12.2014 JP 2014251964
(43) Date of publication of application: 18.10.2017
(73) Proprietor: Oiles Corporation, Tokyo 108-0075 (JP); Oiles Deutschland GmbH, 61239 Ober-Moerlen (DE)
(72) Inventor: HAMRODI, Robert, Ober-Moerlen 61239 (DE); METZLER, Kai, Ober-Moerlen 61239 (DE); NAGASHIMA, Tsuyoshi, Ober-Moerlen 61239 (DE); KUROSE, Kohei, Fujisawa-shi Kanagawa 252-0811 (JP)
(74) Representative: Schlief, Thomas P.
(86) International application number: PCT/JP2015/083359
(87) International publication number: WO 2016/093081

(56) References cited:
- EP-A1- 1 764 241
- JP-A- 2014 206 206
- JP-U- H0 722 124
- JP-U- S6 251 011
- US-A- 5 678 810
- US-B1- 8 292 306
- US-B1- 8 292 306

## Description

### TECHNICAL FIELD

The present invention relates to a vehicle thrust bearing having an upper case and a lower case that are rotatable with respect to each other. Particularly, the present invention relates to a vehicle thrust bearing that is incorporated into a four-wheeled vehicle as a thrust bearing of an air suspension of the vehicle.

### BACKGROUND ART

An air suspension used for front or rear wheels of a four-wheeled vehicle generally has a structure in which an air spring having an air chamber made of a rubber tube is combined with a hydraulic shock absorber.

The air suspension is configured such that a vehicle height and the like can be adjusted by changing the air pressure in the air chamber.

There is a conventional air suspension apparatus that includes a ball bearing as a vehicle thrust bearing, the ball bearing consisting of an outer case that is attached to a body of a vehicle having an air suspension, an inner case that overlaps with the outer case so as to be rotatable with respect to the outer case, and balls that are arranged in an annular space created between the outer case and the inner case for receiving a radial load, wherein an upper end of a piston of a hydraulic shock absorber fits into an inner circumference of the inner case, and a rubber tube of an air spring is attached to a canister, which is a tube upper-end attaching member arranged in a lower area of the inner case (see Japanese Patent Laid-Open No. H05-296277 (particularly Fig. 1), for example). US 8,292,306 B1 discloses a vehicle thrust bearing according to the preamble of claim 1. To increase the lifespan of a shock absorber, this document suggests providing an internal airline with an external input end, wherein the internal airline runs through an upper case and into an opening of an inflatable rubber tube. No external airline shall be provided.

### SUMMARY OF INVENTION

### TECHNICAL PROBLEM

The above-described conventional air suspension apparatus, however, has a problem in that it is difficult to adequately receive a thrust load, because the ball bearing is a radial bearing and the canister and the inner case of the ball bearing are provided separately. The above-described conventional air suspension apparatus also has a problem in that the air spring has a large number of assembly parts and the assembling work is thus complicated.

It is thus an object of the present invention, which has been achieved for addressing the above-described problems of the conventional art, to provide a vehicle thrust bearing that can reduce the number of assembly parts of an air spring used for an air suspension of a vehicle to simplify the assembling work of the air spring.

### SOLUTION TO PROBLEM

According to the present invention, a vehicle thrust bearing includes an upper case that is attached to a body of a vehicle having an air suspension including an air spring, and a lower case that is arranged under the upper case so as to be rotatable with respect to the upper case, wherein the lower case includes in a bottom area thereof a tube upper-end attaching portion to which a rubber tube constituting the air spring is attached. According to the present invention, the upper case includes in a top surface area thereof a concave portion created by cutting away a part of the upper case toward the air spring, and the lower case includes an air nozzle that communicates with an air chamber of the rubber tube constituting the air spring and that radially extends through the concave portion from an axis center side of the concave portion.

According to a second aspect of the present invention, a bearing piece for receiving a thrust load is arranged in an annular space created between the upper case and the lower case.

According to a third aspect of the present invention, the bearing piece is an annular sliding bearing piece made of synthetic resin, and a bearing piece-side anti-rotation engaging portion provided on the annular sliding bearing piece engages with a lower case-side anti-rotation engaging portion provided on the lower case.

According to a fourth aspect of the present invention, the vehicle thrust bearing includes an elastic portion that elastically deforms as one of the upper case and the lower case rotates while being in contact with the other of the upper case and the lower case from a base relative position that is a relative position of the upper case and the lower case at which the air nozzle is located at a center of the concave portion in a rotating direction of the vehicle thrust bearing.

According to a fifth aspect of the present invention, an upper case-side rotation angle restricting portion of the upper case abuts against a lower case-side rotation angle restricting portion of the lower case when the upper case and the lower case relatively rotate with respect to each other for a predetermined angle from a base relative position that is a relative position of the upper case and the lower case at which the air nozzle is located at a center of the concave portion in a rotating direction of the vehicle thrust bearing, and the predetermined angle is smaller than an angle between the base relative position and a relative position of the upper case and the lower case at which the air nozzle abuts against a side wall of the concave portion.

### ADVANTAGEOUS EFFECTS OF INVENTION

Because the vehicle thrust bearing of the present invention includes the upper case that is attached to a body of a vehicle having an air suspension, and the lower case that is arranged under the upper case so as to be rotatable with respect to the upper case, the upper case and the lower case can rotate smoothly with respect to each other. In addition, the vehicle thrust bearing of the present invention can achieve the following unique effects.

According to the present invention, because the lower case includes in the bottom area thereof the tube upper-end attaching portion to which the rubber tube constituting the air spring is attached, the lower case can play a role of a conventional tube upper-end attaching member for the rubber tube. Thus, it is possible to reduce the number of parts.

Also, because a conventional tube upper-end attaching member is no longer needed to be assembled with the bottom area of the lower case independently, it is possible to simplify the work of assembling the rubber tube constituting the air spring with the thrust bearing.

Furthermore, the upper case becomes more rigid in comparison with a conventional thrust bearing in which a lower case member and a tube upper-end attaching member for the rubber tube are provided separately. Thus, the strength of the vehicle thrust bearing can be increased.

Because the upper case includes in the top surface area thereof the concave portion created by cutting away a part of the upper case toward the air spring, and the lower case includes the air nozzle that communicates with the air chamber of the rubber tube constituting the air spring and that radially extends through the concave portion from an axis center side of the concave portion, an upper end side of the air spring where the vehicle thrust bearing is located becomes a stationary side, and an intake and exhaust air tube connected to the air nozzle can be laid out in a stable position. Thus, it is possible to stably adjust the air pressure in the air chamber of the air spring via the air nozzle.

According to the second aspect of the present invention, because the bearing piece for receiving a thrust load is arranged in an annular space created between the upper case and the lower case, the friction resistance between the upper case and the lower case is reduced. Thus, the upper case and lower case can rotate more smoothly with respect to each other.

According to the third aspect of the present invention, because the bearing piece is an annular sliding bearing piece made of synthetic resin, and the bearing piece-side anti-rotation engaging portion provided on the annular sliding bearing piece engages with the lower case-side anti-rotation engaging portion provided on the lower case, the lower case does not slide on the annular sliding bearing piece even if the upper case slides on the annular sliding bearing piece when a rotating force acts on the vehicle thrust bearing. Thus, it is possible to select a material for the lower case with a higher regard for durability than for slidability.

According to the fourth aspect of the present invention, because the vehicle thrust bearing includes the elastic portion that elastically deforms as one of the upper case and the lower case rotates while being in contact with the other of the upper case and the lower case from the base relative position that is a relative position of the upper case and the lower case at which the air nozzle is located at a center of the concave portion in a rotating direction of the vehicle thrust bearing, a return force for returning to the base relative position acts on the lower case when the lower case rotates with respect to the upper case. Thus, it is possible to return the air nozzle to the center of the concave portion in the rotating direction of the vehicle thrust bearing.

According to the fifth aspect of the present invention, because the upper case-side rotation angle restricting portion of the upper case abuts against the lower case-side rotation angle restricting portion of the lower case when the upper case and the lower case relatively rotate with respect to each other for a predetermined angle from the base relative position that is a relative position of the upper case and the lower case at which the air nozzle is located at a center of the concave portion in a rotating direction of the vehicle thrust bearing, and the predetermined angle is set to be smaller than an angle between the base relative position and a relative position of the upper case and the lower case at which the air nozzle abuts against the side wall of the concave portion, the upper case-side rotation angle restricting portion abuts against the lower case-side rotation angle restricting portion to restrict the relative rotation of the upper case and the lower case before the air nozzle abuts against the side wall of the concave portion. Thus, it is possible to prevent the air nozzle from being broken by coming into contact with the upper case.

### BRIEF DESCRIPTION OF DRAWINGS

- **FIG. 1**: is a perspective view of a vehicle thrust sliding bearing as an embodiment of the present invention.
- **FIG. 2**: is an exploded perspective view of the vehicle thrust sliding bearing as an embodiment of the present invention.
- **FIG. 3**: is a plane view as seen in direction 3 of Fig. 1.
- **FIG. 4**: is a cross-sectional view as taken along line 4-4 of Fig. 3.
- **FIG. 5**: is an enlarged cross-sectional view of portion 5 in Fig. 4.

### DESCRIPTION OF EMBODIMENTS

The present invention may be embodied in any form as long as a vehicle thrust bearing as an embodiment of the present invention includes an upper case that is attached to a body of a vehicle having an air suspension including an air spring, and a lower case that is arranged under the upper case so as to be rotatable with respect to the upper case, wherein the lower case includes in a bottom area thereof a tube upper-end attaching portion to which a rubber tube constituting the air spring is attached, for reducing the number of assembly parts of the air spring used for the air suspension of the vehicle to simplify the assembling work of the air spring.

For example, a piston rod of a shock absorber may be inserted through the air spring or arranged adjacent to the air spring.

The vehicle thrust bearing may include a bearing piece that is arranged in an annular space created between the upper case and the lower case for receiving a thrust load acting from a tire, or may not include such bearing piece so that the upper case and the lower case can directly slide on each other.

If the vehicle thrust bearing includes the bearing piece, the bearing piece may be a sliding bearing piece that slides with respect to the upper case or the lower case, or may be a rolling bearing piece that rotatably holds a rolling element such as a ball.

The upper case is required, as a minimum, to abut against a vehicle body-side attaching portion. The air suspension may be a type in which an upper end of a piston rod of a shock absorber fits into a vehicle body-side attaching portion, or may be a type in which the upper end of a piston rod of the shock absorber fits into an upper case.

### EMBODIMENT

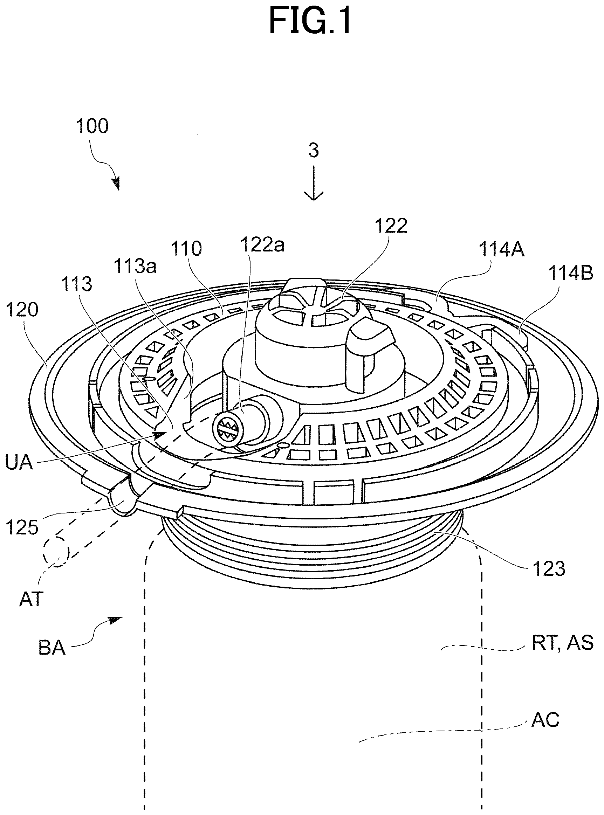

A vehicle thrust sliding bearing 100, which is a vehicle thrust bearing as an embodiment of the present invention, will now be described with reference to Figs. 1 to 5.

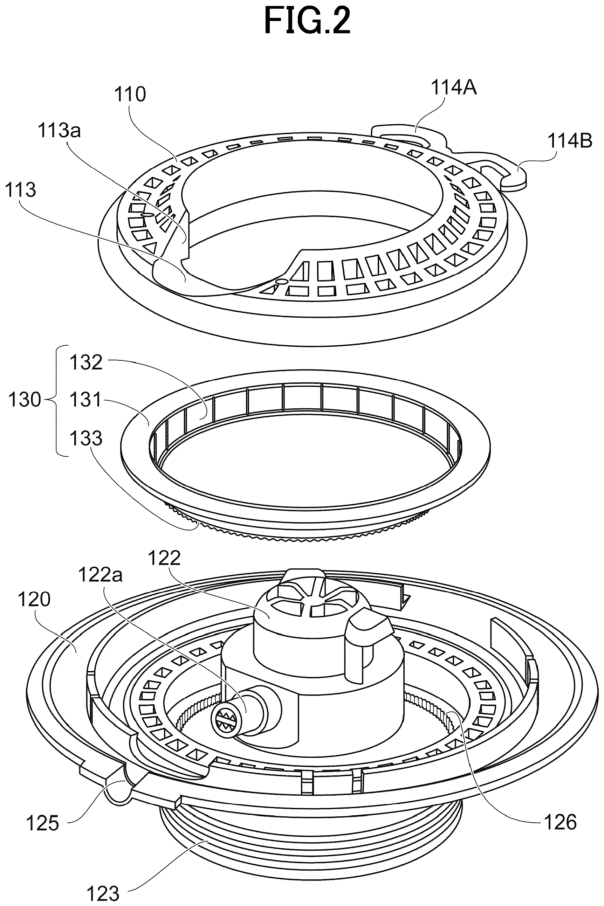

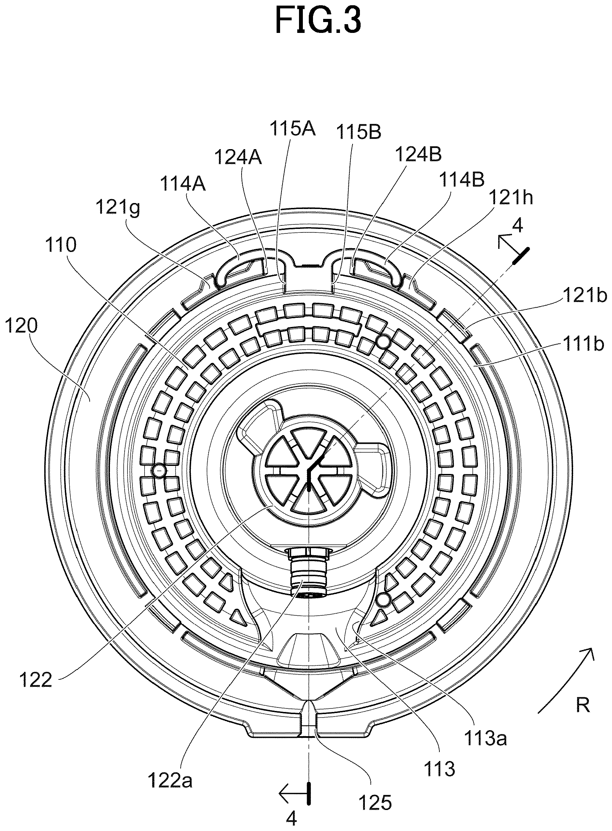

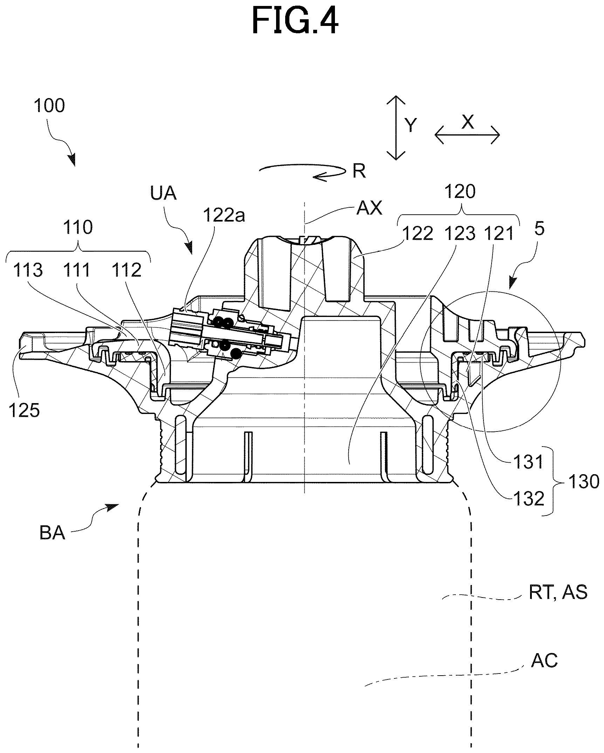

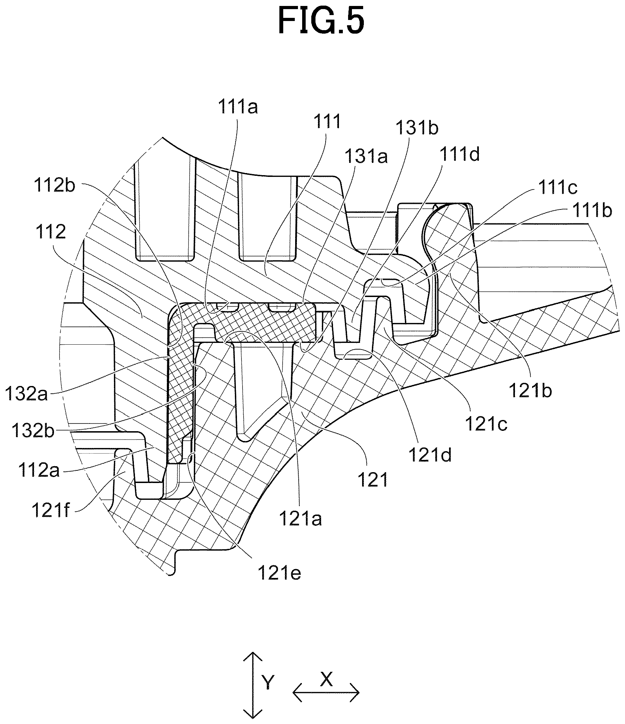

Fig. 1 is a perspective view of the vehicle thrust sliding bearing 100 as an embodiment of the present invention. Fig. 2 is an exploded perspective view of the vehicle thrust sliding bearing 100 as an embodiment of the present invention. Fig. 3 is a plane view as seen in direction 3 of Fig. 1. Fig. 4 is a cross-sectional view as taken along line 4-4 of Fig. 3. Fig. 5 is an enlarged cross-sectional view of portion 5 in Fig. 4.

As illustrated in Figs. 1 to 5, the vehicle thrust sliding bearing 100 as an embodiment of the present invention includes an upper case 110 made of synthetic resin, a lower case 120 made of synthetic resin, and an annular sliding bearing piece 130 as a bearing piece made of synthetic resin.

The upper case 110 is configured to abut against a vehicle-side attaching member, which is a vehicle body-side attaching portion.

In the present embodiment, the upper case 110 is created by integrally forming an annular upper case base 111 that forms an annular upper case bottom surface 111a and is attached to the vehicle in a vertical direction Y of a suspension, and an inner circumferential cylindrical portion 112 that downwardly extends from an inner circumferential end in a radial direction X of the upper case base 111.

The lower case 120 is configured to be arranged under the upper case 110 so as to be rotatable about an axis center AX of the vehicle thrust sliding bearing 100 with respect to the upper case 110.

In the present embodiment, the lower case 120 is created by integrally forming an annular lower case base 121 that is arranged under the upper case 110 so as to be rotatable about the axis center AX with respect to the upper case 110, and a tube upper-end attaching portion 123 that downwardly extends from a radial inner side of the lower case base 121 for attaching a rubber tube RT constituting an air spring AS of the air suspension to a bottom area BA of the lower case 120.

A lower case outer engaging claw 121b is formed on a radial outer side of the lower case base 121. The lower case outer engaging claw 121b engages with an upper case outer annular engaging claw 111b formed on a radial outer side of the upper case base 111 in a rotatable manner in a circumferential direction R.

A lower case outer annular engaging ridge 121c is formed radially inward of the lower case outer engaging claw 121b of the lower case base 121. The lower case outer annular engaging ridge 121c engages, via a small gap, with an upper case outer annular engaging groove 111c formed on the upper case bottom surface 111a of the upper case base 111.

Furthermore, a lower case outer annular engaging groove 121d is formed radially inward of the lower case outer annular engaging ridge 121c of the lower case base 121. The lower case outer annular engaging groove 121d engages, via a small gap, with an upper case outer annular engaging ridge 111d formed on the upper case bottom surface 111a of the upper case base 111.

This prevents an extraneous substance from entering into an annular space created between the upper case 110 and the lower case 120 from radial outside of the annular space.

Furthermore, a lower case inner annular engaging ridge 121f is formed at a radial inner circumferential side of the lower case base 121. The lower case inner annular engaging ridge 121f engages with an upper case inner annular engaging ridge 112a formed on a lower end of the inner circumferential cylindrical portion 112 of the upper case 110 such that a small gap is created between the lower case inner annular engaging ridge 121f and the upper case inner annular engaging ridge 112a in the radial direction X while the lower case inner annular engaging ridge 121f and the upper case inner annular engaging ridge 112a overlap with each other along the vertical direction Y.

This prevents an extraneous substance from entering into an annular space created between the upper case 110 and the lower case 120 from radial inside of the annular space.

The annular sliding bearing piece 130 is configured to exist in an annular space created between the upper case 110 and the lower case 120 for receiving thrust and radial loads acting from a tire.

In the present embodiment, the annular sliding bearing piece 130 is arranged in an annular space between the upper case bottom surface 111a of the upper case base 111 and a lower case top surface 121a of the lower case base 121 as well as in an annular space between an outer circumferential surface 112b of the inner circumferential cylindrical portion 112 and an inner circumferential surface 121e of the lower case base 121.

The annular sliding bearing piece 130 includes an annular thrust sliding bearing piece portion 131, a cylindrical radial sliding bearing piece portion 132, and a bearing piece-side anti-rotation engaging portion 133 that is formed on a lower side of the radial sliding bearing piece portion 132 in a concavo-convex shape along the circumferential direction R.

The thrust sliding bearing piece portion 131 includes a bearing top surface 131a that slidably contacts with the upper case bottom surface 111a of the upper case base 111, and a bearing bottom surface 131b that contacts with the lower case top surface 121a of the lower case base 121 of the lower case 120.

On the other hand, the radial sliding bearing piece portion 132 includes a bearing inner circumferential surface 132a that slidably contacts with the outer circumferential surface 112b of the inner circumferential cylindrical portion 112 of the upper case 110, and a bearing outer circumferential surface 132b that contacts with the inner circumferential surface 121e of the lower case base 121 of the lower case 120.

The bearing piece-side anti-rotation engaging portion 133 engages with a lower case-side anti-rotation engaging portion 126 formed on the lower case 120 in a concavo-convex shape along the circumferential direction R to restrict the rotation of the annular sliding bearing piece 130 with respect to the lower case 120.

In the present embodiment, as one example, the bearing piece-side anti-rotation engaging portion 133 and the lower case-side anti-rotation engaging portion 126 are provided so that the annular sliding bearing piece 130 does not rotate with respect to the lower case 120. Alternatively, the bearing piece-side anti-rotation engaging portion 133 and the lower case-side anti-rotation engaging portion 126 may not be provided so that the annular sliding bearing piece 130 can rotate with respect to the lower case 120.

As described above, in the present embodiment, the lower case 120 integrally includes the tube upper-end attaching portion 123 for attaching the rubber tube RT constituting the air spring AS of the air suspension to the bottom area BA of the lower case 120.

Thus, the lower case 120 can play a role of a conventional tube upper-end attaching member for the rubber tube RT.

Also, a conventional tube upper-end attaching member is no longer needed to be assembled with the bottom area BA of the lower case 120 independently.

Furthermore, the upper case 120 becomes more rigid in comparison with a conventional thrust bearing in which a lower case member and a tube upper-end attaching member for the rubber tube RT are provided separately.

Furthermore, the bearing piece-side anti-rotation engaging portion 133 provided on the annular sliding bearing piece 130 engages with the lower case-side anti-rotation engaging portion 126 provided on the lower case 120.

Thus, the lower case 120 does not slide on the annular sliding bearing piece 130 even if the upper case 110 slides on the annular sliding bearing piece 130 when a rotating force acts on the vehicle thrust bearing.

In other words, it is possible to select a material for the lower case 120 with a higher regard for durability than for slidability.

Also, the upper case 110 includes in a top surface area UA of the upper case 110 a concave portion 113 created by cutting away a part of the upper case 110 toward the air spring AS.

On the other hand, the lower case 120 includes an upwardly projecting center portion 122 that upwardly projects through the annular upper case 110, and the upwardly projecting center portion 122 includes an air nozzle 122a that communicates with an air chamber AC of the rubber tube RT constituting the air spring AS.

The air nozzle 122a is configured to radially project through the concave portion 113 from an axis center side of the concave portion 113.

Thus, an upper end side of the air spring AS where the vehicle thrust bearing is located becomes a stationary side, and an intake and exhaust air tube AT connected to the air nozzle 122a can be laid out in a stable position.

An air tube guide portion 125 is formed on the lower case 120 at a position facing the air nozzle 122a. The air tube guide portion 125 is configured to engage with the intake and exhaust air tube AT to maintain the position of the intake and exhaust air tube AT.

In the present embodiment, a relative position of the upper case 110 and the lower case 120 at which the air nozzle 122a is located at a center of the concave portion 113 in the circumferential direction R, which is a rotating direction of the vehicle thrust sliding bearing 100, is defined as a base relative position.

One of the upper case 110 and the lower case 120, or in this embodiment the upper case 110, includes elastic portions 114A and 114B.

The elastic portions 114A and 114B abut against the other of the upper case 110 and the lower case 120, or in this embodiment the lower case 120, and elastically deform as the upper case 110 or the lower case 120 rotate with respect to each other from the base relative position.

Particularly, the elastic portions 114A and 114B are formed in a bow shape, and leading ends of the elastic portions 114A and 114B respectively engage with engaging projections 121g and 121h formed in the vicinity of the lower case outer engaging claw 121b (see Fig. 3).

As the lower case 120 clockwisely rotates with respect to the upper case 110 from the base relative position in the circumferential direction R illustrated in Fig. 3, the elastic portion 114A bends and elastically deforms like a torsion bar spring or a flat spring.

On the other hand, as the lower case 120 counter-clockwisely rotates with respect to the upper case 110 from the base relative position in the circumferential direction R illustrated in Fig. 3, the elastic portion 114B bends and elastically deforms like a torsion bar spring or a flat spring.

Thus, a return force for returning to the base relative position acts on the lower case 120 when the lower case 120 rotates with respect to the upper case 110. Also, the upper case 110 includes upper case-side rotation angle restricting portions 115A and 115B, and the lower case 120 includes lower case-side rotation angle restricting portions 124A and 124B.

When the upper case 110 and the lower case 120 relatively rotate with respect to each other for a predetermined angle from the base relative position, the upper case-side rotation angle restricting portions 115A and 115B abut against the lower case-side rotation angle restricting portions 124A and 124B.

The predetermined angle is set to be smaller than an angle between the base relative position and a relative position of the upper case 110 and the lower case 120 at which the air nozzle 122a abuts against a side wall 113a of the concave portion 113.

Particularly, when the lower case 120 clockwisely rotates with respect to the upper case 110 for the predetermined angle in the circumferential direction R illustrated in Fig. 3, the lower case-side rotation angle restricting portion 124A abuts against the upper case-side rotation angle restricting portion 115A.

On the other hand, when the lower case 120 counter-clockwisely rotates with respect to the upper case 110 for the predetermined angle in the circumferential direction R illustrated in Fig. 3, the lower case-side rotation angle restricting portion 124B abuts against the upper case-side rotation angle restricting portion 115B.

Thus, the upper case-side rotation angle restricting portions 115A and 115B abut against the lower case-side rotation angle restricting portions 124A and 124B to restrict the relative rotation of the upper case 110 and the lower case 120 before the air nozzle 122A abuts against the side wall 113a of the concave portion 113.

With the above-described vehicle thrust sliding bearing 100, which is a vehicle thrust bearing as an embodiment of the present invention, because the lower case 120 includes in the bottom area BA of the lower case 120 the tube upper-end attaching portion 123 to which the rubber tube RT constituting the air spring AS is attached, it is possible to omit a part whose role is now played by the lower case 120 to reduce the total number of parts. It is also possible to simplify the work of assembling the rubber tube RT constituting the air spring AS with the thrust sliding bearing. Furthermore, the strength of the vehicle thrust sliding bearing 100 can be increased in comparison with a conventional vehicle thrust sliding bearing in which a lower case member and a tube upper-end attaching member for the rubber tube RT are provided separately.

Also, because the bearing piece is the annular sliding bearing piece 130 made of synthetic resin, and the bearing piece-side anti-rotation engaging portion 133 provided on the annular sliding bearing piece 130 engages with the lower case-side anti-rotation engaging portion 126 provided on the lower case 120, it is possible to select a material for the lower case 120 with a higher regard for durability than for slidability.

Also, because the upper case 110 includes in the top surface area UA of the upper case 110 the concave portion 113 created by cutting away a part of the upper case 110 toward the air spring AS, and the lower case 120 includes the air nozzle 122a that communicates with the air chamber AC of the rubber tube RT constituting the air spring AS and that radially projects through the concave portion 113 from the axis center side of the concave portion 113, it is possible to stably adjust the air pressure in the air chamber AC of the air spring AS via the air nozzle 122a.

Also, because the vehicle thrust sliding bearing 100 includes the elastic portions 114A and 114B that elastically deform as the upper case 110, or one of the upper case 110 and the lower case 120, rotates while being in contact with the lower case 120, or the other of the upper case 110 and the lower case 120, from the base relative position that is a relative position of the upper case 110 and the lower case 120 at which the air nozzle 122a is located at a center of the concave portion 113 in the circumferential direction R, which is a rotating direction of the vehicle thrust sliding bearing 100, it is possible to return the air nozzle 122a to the center of the concave portion 113 in the circumferential direction R.

Furthermore, because the upper case-side rotation angle restricting portions 115A and 115B of the upper case 110 abut against the lower case-side rotation angle restricting portions 124A and 124B of the lower case 120 when the upper case 110 and the lower case 120 relatively rotate with respect to each other for a predetermined angle from the base relative position, and the predetermine angle is set to be smaller than an angle between the base relative position and a relative position of the upper case 110 and the lower case 120 at which the air nozzle 122a abuts against the side wall 113s of the concave portion 113, it is possible to prevent the air nozzle 122a from being broken by coming into contact with the upper case 110.

### REFERENCE SIGNS LIST

- 100: vehicle thrust sliding bearing (vehicle thrust bearing)
- 110: uppercase
- 111: upper case base
- 111a: upper case bottom surface
- 111b: upper case outer annular engaging claw
- 111c: upper case outer annular engaging groove
- 111d: upper case outer annular engaging ridge
- 112: inner circumferential cylindrical portion
- 112a: upper case inner annular engaging ridge
- 112b: outer circumferential surface
- 113: concave portion
- 113a: side wall
- 114A, 114B: elastic portion
- 115A, 115B: upper case-side rotation angle restricting portion
- 120: lower case
- 121: lower case base
- 121a: lower case top surface
- 121b: lower case outer engaging claw
- 121c: lower case outer annular engaging ridge
- 121d: lower case outer annular engaging groove
- 121e: inner circumferential surface
- 121f: lower case inner annular engaging ridge
- 122: upwardly projecting center portion
- 122a: air nozzle
- 123: tube upper-end attaching portion
- 124A, 124B: lower case-side rotation angle restricting portion
- 125: air tube guide portion
- 126: lower case-side anti-rotation engaging portion
- 130: annular sliding bearing piece (bearing piece)
- 131: thrust sliding bearing piece portion
- 131a: bearing top surface
- 131b: bearing bottom surface
- 132: radial sliding bearing piece portion
- 132a: bearing inner circumferential surface
- 132b: bearing outer circumferential surface
- 133: bearing piece-side anti-rotation engaging portion
- AC: air chamber
- AS: air spring
- AT: intake and exhaust air tube
- AX: axis center of a vehicle thrust sliding bearing
- BX: bottom area of the lower case
- R: circumferential direction
- RT: rubber tube
- UA: top surface area of the upper case
- X: radial direction
- Y: vertical direction of a suspension

## Claims

1. A vehicle thrust bearing (100) comprising: an upper case (110) that is to be attached to a body of a vehicle having an air suspension including an air spring (AS); and a lower case (120) that is arranged under the upper case (110) so as to be rotatable with respect to the upper case (110), wherein
the lower case (120) includes in a bottom area thereof a tube upper-end attaching portion (123) to which a rubber tube (RT) constituting the air spring (AS) is to be attached,
**characterized in that** the upper case (110) includes in a top surface area thereof a concave portion (113) created by cutting away a part of the upper case (110) toward the air spring (AS), and
the lower case (120) includes an air nozzle (122a) that communicates with an air chamber (AC) of the rubber tube (RT) constituting the air spring (AS) and that radially extends through the concave portion (113) from an axis center (AX) side of the concave portion (113).

2. The vehicle thrust bearing (100) according to claim 1, wherein a bearing piece for receiving a thrust load is arranged in an annular space created between the upper case (110) and the lower case (120).

3. The vehicle thrust bearing (100) according to claim 2, wherein the bearing piece is an annular sliding bearing piece (130) made of synthetic resin, and a bearing piece-side anti-rotation engaging portion (133) provided on the annular sliding bearing piece (130) engages with a lower case-side anti-rotation engaging portion (126) provided on the lower case (120).

4. The vehicle thrust bearing (100) according to any of claims 1-3, wherein the vehicle thrust bearing (100) includes an elastic portion (114A, 114B) that elastically deforms as one of the upper case (110) and the lower case (120) rotates while being in contact with the other of the upper case (110) and the lower case (120) from a base relative position that is a relative position of the upper case (110) and the lower case (120) at which the air nozzle (122a) is located at a center of the concave portion (113) in a rotating direction of the vehicle thrust bearing (100).

5. The vehicle thrust bearing (100) according to any of claims 1-4, wherein
an upper case-side rotation angle restricting portion (115A, 115B) of the upper case (110) abuts against a lower case-side rotation angle restricting portion (124A, 124B) of the lower case (120) when the upper case (110) and the lower case (120) relatively rotate with respect to each other for a predetermined angle from a base relative position that is a relative position of the upper case (110) and the lower case (120) at which the air nozzle (122a) is located at a center of the concave portion (113) in a rotating direction of the vehicle thrust bearing (100), and
the predetermined angle is smaller than an angle between the base relative position and a relative position of the upper case (110) and the lower case (120) at which the air nozzle (122a) abuts against a side wall of the concave portion (113).

## Patentansprüche

1. Fahrzeug-Traglager (100), umfassend: ein Obergehäuse (110), das anzubringen ist an einer Karosserie eines Fahrzeugs mit einer Luftfederung enthaltend eine Luftfeder (AS); und ein Untergehäuse (120), das unter dem Obergehäuse (110) so angeordnet ist, dass es bezüglich des Obergehäuses (110) drehbar ist, wobei
das Untergehäuse (120) in einem Bodenbereich davon einen Rohroberend-Anbringungsteil (123) enthält, an dem ein Gummirohr (RT), das die Luftfeder (AS) bildet, anzubringen ist,
**dadurch gekennzeichnet, dass** das Obergehäuse (110) in einem oberen Flächenbereich davon einen konkaven Teil (113) enthält, geschaffen durch ein Wegschneiden eines Stücks des Obergehäuses (110) zur Luftfeder (AS) hin, und
das Untergehäuse (120) eine Luftdüse (122a) enthält, die in Verbindung mit einer Luftkammer (AC) des Gummirohrs (RT) steht, das die Luftfeder (AS) bildet, und die sich radial durch den konkaven Teil (113) von einer Seite der Achsenmitte (AX) des konkaven Teils (113) erstreckt.

2. Fahrzeug-Traglager (100) nach Anspruch 1, wobei ein Lagerteil zum Aufnehmen einer Traglast in einem ringförmigen Zwischenraum angeordnet ist, der zwischen dem Obergehäuse (110) und dem Untergehäuse (120) geschaffen ist.

3. Fahrzeug-Traglager (100) nach Anspruch 2, wobei das Lagerteil ein ringförmiges Gleitlagerteil (130) aus Kunstharz ist und sich ein lagerteilseitiger Drehsicherungs-Koppelteil (133), der am ringförmigen Gleitlagerteil (130) vorgesehen ist, mit einem untergehäuseseitigen Drehsicherungs-Koppelteil (126) koppelt, der am Untergehäuse (120) vorgesehen ist.

4. Fahrzeug-Traglager (100) nach einem beliebigen der Ansprüche 1 bis 3, wobei das Fahrzeug-Traglager (100) einen elastischen Teil (114A, 114B) enthält, der sich elastisch verformt, wenn sich das Obergehäuse (110) oder das Untergehäuse (120), während es in Kontakt mit dem Untergehäuse (110) bzw. dem Obergehäuse (120) steht, aus einer relativen Grundstellung dreht, die eine relative Stellung des Obergehäuses (110) und des Untergehäuses (120) ist, in der sich die Luftdüse (122a) in einer Mitte des konkaven Teils (113) in einer Drehrichtung des Fahrzeug-Traglagers (100) befindet.

5. Fahrzeug-Traglager (100) nach einem beliebigen der Ansprüche 1 bis 4, wobei
ein obergehäuseseitiger Drehwinkeleinschränkungsteil (115A, 115B) des Obergehäuses (110) an einem untergehäuseseitigen Drehwinkeleinschränkungsteil (124A, 124B) des Untergehäuses (120) anschlägt, wenn sich das Obergehäuse (110) und das Untergehäuse (120) relativ zueinander um einen vorgegebenen Winkel aus einer relativen Grundstellung drehen, die eine relative Stellung des Obergehäuses (110) und des Untergehäuses (120) ist, in der sich die Luftdüse (122a) in einer Mitte des konkaven Teils (113) in einer Drehrichtung des Fahrzeug-Traglagers (100) befindet, und
der vorgegebene Winkel kleiner ist als ein Winkel zwischen der relativen Grundstellung und einer relativen Stellung des Obergehäuses (110) und des Untergehäuses (120), in der die Luftdüse (122a) an einer Seitenwand des konkaven Teils (113) anschlägt.

## Revendications

1. Palier de butée (100) de véhicule comprenant : un carter supérieur (110) qui est destiné à être fixé à un corps d'un véhicule ayant une suspension pneumatique comprenant un ressort pneumatique (AS) ; et un carter inférieur (120) qui est disposé sous le carter supérieur (110) de manière à être rotatif par rapport au carter supérieur (110), dans lequel
le carter inférieur (120) comprend dans sa partie inférieure une partie de fixation (123) d'extrémité supérieure de tube à laquelle doit être fixé un tube en caoutchouc (RT) constituant le ressort pneumatique (AS),
**caractérisé en ce que** le carter supérieur (110) comprend dans une aire de surface supérieure sur lui une partie concave (113) créée par découpe d'une partie du carter supérieur (110) vers le ressort pneumatique (AS), et
le carter inférieur (120) comprend une buse à air (122a) qui communique avec une chambre à air (AC) du tube en caoutchouc (RT) constituant le ressort pneumatique (AS) et qui s'étend radialement à travers la partie concave (113) depuis un côté de centre d'axe (AX) de la partie concave (113).

2. Palier de butée (100) de véhicule selon la revendication 1, dans lequel une pièce d'appui destinée à recevoir une poussé axiale est disposée dans un espace annulaire créé entre le carter supérieur (110) et le carter inférieur (120).

3. Palier de butée (100) de véhicule selon la revendication 2, dans lequel la pièce d'appui est une pièce d'appui (130) coulissante annulaire réalisée en résine synthétique, et une partie d'engagement (133) anti-rotation de côté de pièce d'appui prévue sur la pièce d'appui (130) coulissante annulaire s'engage avec une partie d'engagement (126) anti-rotation de côté de carter inférieur prévue sur le carter inférieur (120).

4. Palier de butée (100) de véhicule selon l'une quelconque des revendications 1-3, dans lequel le palier de butée (100) de véhicule comprend une partie élastique (114A, 114B) qui se déforme élastiquement lorsque l'un du carter supérieur (110) et du carter inférieur (120) tourne tout en étant en contact avec l'autre du carter supérieur (110) et du carter inférieur (120) à partir d'une position relative de base qui est une position relative du carter supérieure (110) et du carter inférieur (120) à laquelle la buse à air (122a) est située à un centre de la partie concave (113) dans un sens de rotation du palier de butée (100) de véhicule.

5. Palier de butée (100) de véhicule selon l'une quelconque des revendications 1-4, dans lequel
une partie de limitation (115A, 115B) d'angle de rotation de côté de carter supérieur du carter supérieur (110) vient en butée contre une partie de limitation (124A, 124B) d'angle de rotation de côté de carter inférieur du carter inférieur (120) lorsque le carter supérieur (110) et le carter inférieur (120) tournent l'un par rapport à l'autre d'un angle prédéterminé à partir d'une position relative de base qui est une position relative du carter supérieure (110) et du carter inférieur (120) à laquelle la buse à air (122a) est située à un centre de la partie concave (113) dans un sens de rotation du palier de butée (100) de véhicule, et
l'angle prédéterminé est inférieur à un angle entre la position relative de base et une position relative du carter supérieur (110) et du carter inférieur (120) à laquelle la buse à air (122a) vient en butée contre une paroi latérale de la partie concave (113).
